# EUROPEAN PATENT APPLICATION

(11) **EP 4 102 340 A1**
(43) Date of publication of application: **14.12.2022**
(21) Application number: 22170582.5
(22) Date of filing: 28.04.2022
(51) Int. Cl.: G06F 1/16, G06F 3/04847

(54) **METHOD AND APPARATUS FOR DISPLAYING TARGET OBJECT**

(30) Priority: 10.06.2021 CN 202110649971
(71) Applicant: Beijing Dajia Internet Information Technology Co., Ltd., Beijing 100085 (CN)
(72) Inventor: WANG, Hui, Haidian District, Beijing, 100085 (CN); ZHANG, Jianxin, Haidian District, Beijing, 100085 (CN); ZHU, Bixuan, Haidian District, Beijing, 100085 (CN)
(74) Representative: Vossius & Partner Patentanwälte Rechtsanwälte mbB

(57) **Abstract**

The present disclosure relates to displaying a target object, including displaying (S201), in a display interface, the target object with first color information corresponding to a first color parameter, acquiring (S203) state change data of the electronic device, the state change data is indicative of a change in at least one of direction or angle of an electronic device, and determining (S205) at least two colored display areas of the target object according to the state change data, with each of the colored display areas being displayed with different color information and a size of the colored display area being changed dynamically based on the state change data.

## Description

### TECHNICAL FIELD

This application relates to the field of Internet technology, and in particular to displaying a target object in relation to videos.

### BACKGROUND

Nowadays, mobile terminals are widely used in people's life and work. Through some simple touch or click operations performed in multiple applications installed on a mobile terminal, various online interactions can be realized. For example, a host can be "followed" by users as the users click on a follow button control on a short video display interface. In another example, a post function can be achieved by clicking on a talk-to-post button control on a personal homepage display interface.

### SUMMARY

The present disclosure provides for displaying a target object, technical solutions of which are described as follows.

According to some arrangements of the disclosure, a method for displaying a target object, as performed by an electronic, includes displaying the target object in a display interface, the target object is displayed with first color information corresponding to a first color parameter. The method further includes acquiring state change data of the electronic device. The state change data is indicative of a change in direction and/or angle of the electronic device. The method further includes determining at least two colored display areas of the target object according to the state change data. Each of the colored display areas is displayed with different color information and a size of the colored display area changes dynamically based on the state change data.

In some embodiments, the at least two colored display areas includes a first colored display area and a second colored display area, the state change data includes angle change data in a preset direction, and the determining the at least two colored display areas of the target object according to the state change data includes: determining, according to the angle change data in the preset direction, the first colored display area of the first color information on the target object and the second colored display area of second color information corresponding to a second color parameter on the target object; and displaying the first colored display area with the first color information, and displaying the second colored display area with the second color information.

In some embodiments, the method further includes: updating color information corresponding to the target object by gradually shrinking the first colored display area of the first color information on the target object, and gradually expanding the second colored display area of the second color information on the target object.

In some embodiments, the method further includes: determining, according to the angle change data in the preset direction, an initial display area of the second color information on the target object, to enable the second colored display area to be presented as gradually expanding from the initial display area.

In some embodiments, wherein color information displayed in the second colored display area includes gradient color information transitioning from the first color parameter to the second color parameter, and the method further includes: determining, according to a width of a reference target object and a size of the target object, a width of a to-be-displayed area corresponding to the gradient color information.

In some embodiments, the reference target object is located in a login display interface, and the login display interface and the display interface belong to a same application.

In some embodiments, the color information displayed in the second colored display area further includes solid color information corresponding to the second color parameter, and the displaying the second colored display area with the second color information includes: in response to determining that an angle change value in the angle change data is less than a preset value, displaying, in the second colored display area, a part of the gradient color information corresponding to the angle change value, wherein a width of the second colored display area is less than the width of the to-be-displayed area; or in response to determining that the angle change value in the angle change data is equal to the preset value, displaying, in the second colored display area, all of the gradient color information corresponding to the angle change value, wherein the width of the second colored display area is equal to the width of the to-be-displayed area; or in response to determining that the angle change value in the angle change data is greater than the preset value, displaying, in the second colored display area, the solid color information and all of the gradient color information corresponding to the angle change value, wherein the width of the second colored display area is greater than the width of the to-be-displayed area.

In some embodiments, the determining, according to the width of the reference target object and the size of the target object, the width of the to-be-displayed area corresponding to the gradient color information includes: determining a reference width according to the width of the reference target object; and in response to that a width of the target object is greater than the reference width, determining the width of the to-be-displayed area as the reference width; or in response to that the width of the target object is less than or equal to the reference width and greater than a height of the target object, determining the width of the to-be-displayed area as the width of the target object; or in response to that the width of the target object is less than or equal to the height of the target object, determining the width of the to-be-displayed area as the height of the target object.

In some embodiments, the target object includes a preset display area or a preset operation area in the display interface.

According to some arrangements of the disclosure, an apparatus for displaying a target object includes: a first displaying module, configured to display a target object in a display interface, wherein the target object is displayed with first color information corresponding to a first color parameter; an acquiring module, configured to acquire state change data of the electronic device, wherein the state change data is indicative of a change in at least one of direction or angle of the electronic device; and a second displaying module, configured to determine at least two colored display areas of the target object according to the state change data, wherein each of the colored display areas is displayed with different color information and a size of the colored display area changes dynamically based on the state change data.

In some embodiments, the at least two colored display areas includes a first colored display area and a second colored display area, the state change data includes angle change data in a preset direction, and the processor is configured to second displaying module includes: a first determining module, configured to determine, according to the angle change data in the preset direction, the first colored display area of the first color information on the target object and the second colored display area of second color information corresponding to a second color parameter on the target object; and a displaying submodule, configured to display the first colored display area with the first color information, and displaying the second colored display area with the second color information.

In some embodiments, the apparatus further includes: an updating module, configured to update color information corresponding to the target object by gradually shrinking the first colored display area of the first color information on the target object gradually shrinks, and gradually expanding the second colored display area of the second color information on the target object.

In some embodiments, the apparatus further includes: a second determining module, configured to determine, according to the angle change data in the preset direction, an initial display area of the second color information on the target object, to enable the second colored display area to be presented as gradually expanding from the initial display area.

In some embodiments, color information displayed in the second colored display area includes gradient color information transitioning from the first color parameter to the second color parameter, and the apparatus further includes: a third determining module, configured to determine, according to a width of a reference target object and a size of the target object, a width of a to-be-displayed area corresponding to the gradient color information.

In some embodiments, the reference target object is located in a login display interface, and the login display interface and the display interface belong to a same application.

In some embodiments, the color information displayed in the second colored display area further includes solid color information corresponding to the second color parameter, and the displaying submodule is configured to: in response to determining that an angle change value in the angle change data is less than a preset value, display, in the second colored display area, a part of the gradient color information corresponding to the angle change value, wherein a width of the second colored display area is less than the width of the to-be-displayed area; or in response to determining that the angle change value in the angle change data is equal to the preset value, display, in the second colored display area, all of the gradient color information corresponding to the angle change value, wherein the width of the second colored display area is equal to the width of the to-be-displayed area; or in response to determining that the angle change value in the angle change data is greater than the preset value, display, in the second colored display area, the solid color information and all of the gradient color information corresponding to the angle change value, wherein the width of the second colored display area is greater than the width of the to-be-displayed area.

In some embodiments, the third determining module is configured to: determine a reference width according to the width of the reference target object; and in response to that a width of the target object is greater than the reference width, determine the width of the to-be-displayed area as the reference width; or, in response to that the width of the target object is less than or equal to the reference width and greater than a height of the target object, determine the width of the to-be-displayed area as the width of the target object; or, in response to that the width of the target object is less than or equal to the height of the target object, determine the width of the to-be-displayed area as the height of the target object.

In some embodiments, the target object includes a preset display area or a preset operation area in the display interface.

According to some arrangements of the disclosure, an electronic device includes a processor; and a memory configured to store instructions executable by the processor. The processor is configured to execute the instruction to implement any method described herein.

According to some arrangements of the disclosure, a non-transitory computer-readable storage medium having instructions therein that cause, when being executed by a processor of an electronic device, the electronic device to implement any method described herein.

Based on the technical solutions provided by the embodiments of the disclosure, at least the following beneficial effects can be achieved.

The target object is displayed in a display interface, wherein the target object is displayed with first color information corresponding to a first color parameter and the target object includes a preset display area or a preset operation area in the display interface; state change data of the electronic device is acquired; and at least two colored display areas of the target object are determined according to the state change data, with each of the colored display areas being displayed with different color information and a size of the colored display area being changed dynamically based on the state change data; wherein the state change data is indicative of a change in direction and/or angle of the electronic device. According to the embodiments of the application, the target object can be displayed with color changed based on the state change data, with different color information displayed in different colored display areas on the target object. In this way, when the user holds the electronic device to swing left and right, the target object can be displayed with color having a dynamic change effect, thereby improving interest and richness during user-machine interaction.

It should be understood that the above general description and the following detailed description are only exemplary and explanatory, and are not intended to limit the disclosure.

### BRIEF DESCRIPTION OF THE DRAWINGS

The drawings herein are incorporated into the specification and constitute a part thereof, show arrangements conforming to the disclosure, and together with the specification are used to explain the principle of the disclosure, without constituting an improper limitation of the disclosure.
FIGS. 1A and 1B are a schematic diagrams showing an application environment for displaying the target object according to some arrangements.
FIG. 2 is a flow chart showing the method for displaying the target object according to some arrangements.
FIG. 3 is a flowchart showing the method for displaying the target object according to some arrangements.
FIG. 4 is a schematic diagram showing a display interface according to some arrangements.
FIG. 5 is a schematic diagram showing a three-axis coordinate system according to some arrangements.
FIGS. 6A and 6B are schematic diagrams showing a display interface according to some arrangements.
FIG. 7 is a schematic diagram showing a target object according to some arrangements.
FIG. 8 is a flow chart showing the method for displaying the target object according to some arrangements.
FIG. 9 is a schematic diagram showing a target object according to some arrangements.
FIG. 10 is a schematic diagram showing a target object according to some arrangements.
FIG. 11 is a schematic diagram showing a target object according to some arrangements.
FIG. 12 is a block diagram showing the apparatus for displaying the target object according to some arrangements.
FIG. 13 is a block diagram showing the electronic device for displaying the target object according to some arrangements.

### DETAILED DESCRIPTION

In order to enable those of ordinary skill in the art to better understand the technical solutions of the disclosure, the technical solutions according to some arrangements of the disclosure will be described clearly and completely with reference to the accompanying drawings as follows.

It should be noted that the terms "first", "second", and the like in the specification and claims of the disclosure and the above-mentioned drawings are used to distinguish similar elements like target objects, and are not necessarily used to describe a specific sequence or priority. It should be understood that the elements described in this way can be interchanged under appropriate circumstances so that the arrangements of the disclosure described herein can be also implemented in an order other than those illustrated or described herein. The implementation manners described in the following arrangements do not represent all implementation manners consistent with the disclosure. On the contrary, they are merely examples of apparatuses and methods consistent with some aspects of the disclosure as detailed in the appended claims.

In many existing terminal applications, operation controls or user interactive elements in the display interface, such as buttons, can only be displayed in a single color, which appears relatively monotonous to a viewer. In addition, the same button in different display interfaces is only presented in the single color, which lacks richness and sense of control, thus causing the product user experience to be boring, monotonous, cold, regular, and overall poor.

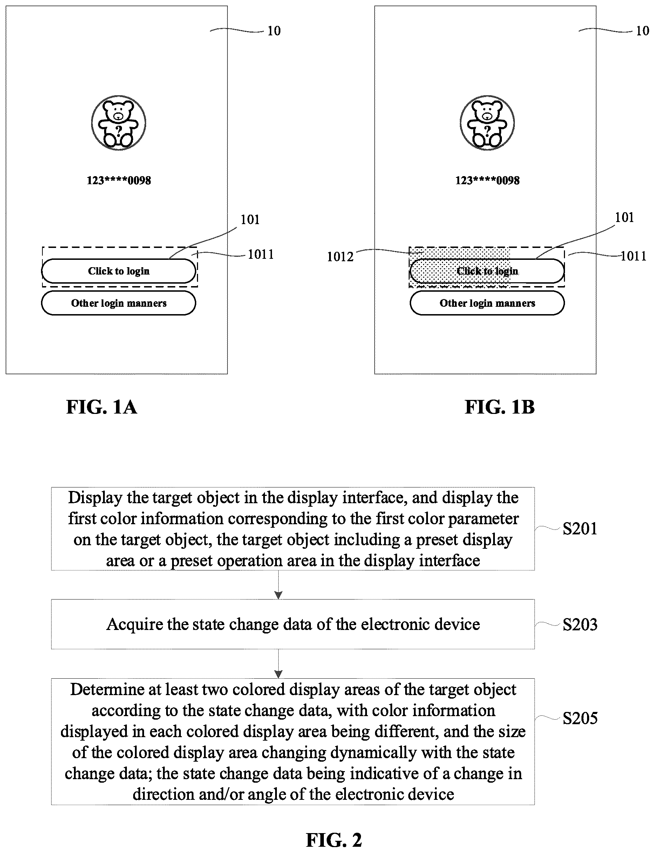

FIGS. 1A and 1B are schematic diagrams showing an application environment for displaying a target object according to some arrangements. As shown in FIGS. 1A and 1B, the application environment may include an electronic device that displays a target object. A display interface 10 may be displayed by the electronic device, and a target object 101 is displayed in the display interface 10. The target object 101 includes, is defined by, or occupies a preset display area or a preset operation area in the display interface 10. The preset display area or present operation area for the target object 101 is defined by the oblong boundary as shown in the example shown in FIGS. 1A and 1B. For example, in the application environment, the target object 101 is a user interactive element such as a login button or another button that can trigger subsequent actions or changes to the display interface 10.

In some optional arrangements, as shown in FIG. 1A, the target object 101 may be displayed by the above-mentioned electronic device in the display interface 10, and the target object 101 may be displayed with first color information corresponding to a first color parameter, therefore forming a first colored display area 1011. As shown in FIG. 1B, according to state change data as acquired, a first colored display area 1011 and a second colored display area 1012 of the target object 101 are determined. The first color information is displayed in the first colored display area 1011, and second color information is displayed in the second colored display area 1012. In some arrangements, the above-mentioned electronic device may include, but is not limited to, a variety of electronic devices including smart phones, desktop computers, tablet computers, notebook computers, smart speakers, digital assistants, augmented reality (AR) / virtual reality (VR) devices, smart wearable devices and the like. It may also be software that runs on the above-mentioned electronic devices, such as applications, applets, and the like. Optionally, an operating system running on the electronic device may include, but is not limited to, Android, IOS, Linux, Windows, Unix, and the like.

FIG. 2 is a flowchart showing a method for displaying a target object according to some arrangements. As shown in Fig. 2, the display method may be applied to or performed by electronic devices or other node devices, including S201, S203 and S205.

In S201, the target object is displayed in the display interface (e.g., 10), and the first color information corresponding to the first color parameter is displayed on the target object (e.g., 101). The target object includes, is defined by, or occupies a preset display area or a preset operation area in the display interface.

In some arrangements, a variety of applications such as game applications, social applications, and video applications may be installed on the electronic device. The display interface may belong to the application, for example, may include a login display interface, a user information display interface, or a live-broadcasting display interface. The target object is a preset display area or a preset operation area in the display interface. For example, the target object may include buttons, text boxes, windows, and any other areas, controls or panels that can be operated. Taking a video application as an example, in response to that the electronic device starts the video application (e.g., in response to user selection), a login display interface may be displayed. The login display interface includes a login button control. The first color information corresponding to the first color parameter is displayed on the target object (e.g., 101). Initially, the first color information may fill the entire preset display area or entire preset operation area of the target object. The first color parameter may include any single color parameter. In other words, the color information corresponding to a single color is initially displayed on the target object.

In some arrangements, the target object may be provided in any area of the first display interface e.g., 1011, for example, in the top portion, bottom portion, left portion, right portion, a middle portion, or any other suitable portion of the first display interface. Its actual position may be determined according to usage habits of the user.

In S203, the state change data of the electronic device is acquired.

In S205, at least two colored display areas (e.g., 1011 and 1012) of the target object are determined according to the state change data. The color information displayed in each colored display area is different, and the size of the colored display area changes dynamically with the state change data. The state change data is indicative of a change in direction and/or angle of the electronic device.

In some arrangements of the application, the state change data may be generated by the electronic device due to a change in the user's holding posture (e.g., change in the manner in which the user holds the electronic device), thus representing the change in the orientation of the electronic device, such as direction in which the electronic device is pointing and/or the angle of the electronic device relative to a line. That is, the state change data includes direction change data indicative of the amount of change in the direction of the electronic device and angle change data indicative of the amount of change in the angle of the electronic device in a given direction. By sensing the posture change of the user holding the electronic device, the state change of the electronic device is detected to obtain the state change data of the electronic device. Further, according to the state change data, at least two colored display areas 1011 and 1012 of the target object are determined, and different color information is displayed in each colored display area 1011 or 1012, and the sizes of the colored display area 1011 and 1012 changes dynamically with the state change data.

In the related art, the target object of the display interface is only displayed with a single color, and other target objects in any display interface other than the display interface in the application are also displayed with a single color, thus leading to the lack of richness, control and agile experience in the display of the target object in the application. In comparison, according to some arrangements of the application, the color information displayed on the target object may be changed based on the state change data, transitioning from displaying the first color information to displaying both the first color information and the second color information, and presenting an effect of dynamic change. In this way, the display richness of the target object can be improved, and the user can be provided with a sense of manipulation, thus enhancing the user experience.

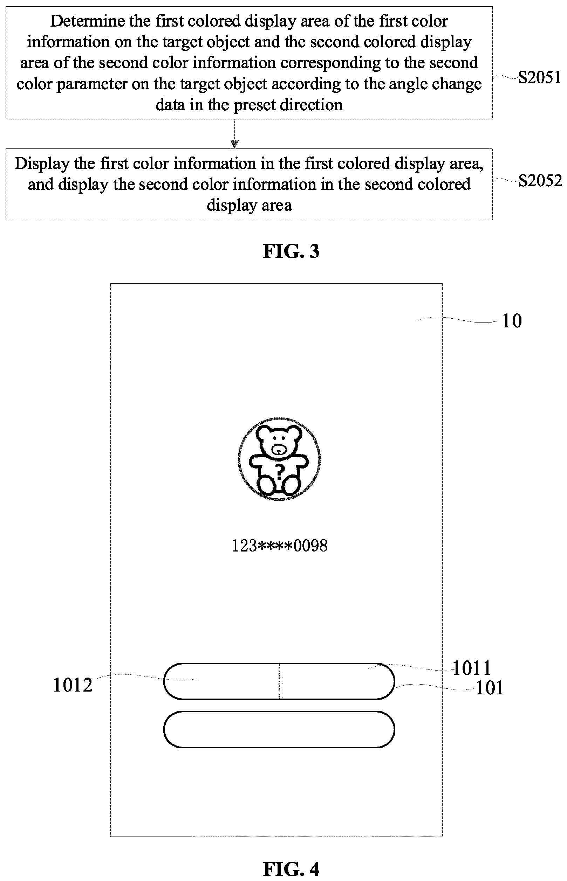

As mentioned above, according to some arrangements of the application, the posture change of the user holding the electronic device is detected to obtain the state change data of the electronic device. In some arrangements, the state change data includes angle change data of the electronic device in a preset direction. FIG. 3 is a flowchart of the method for displaying the target object according to some arrangements. As shown in FIG. 3, S205 may be implemented as following S2051 and S2052.

In S2051, the first colored display area 1011 displaying the first color information on the target object and the second colored display area 1012 displaying the second color information corresponding to the second color parameter on the target object are determined according to the angle change data in the preset direction.

In S2052, the first color information is displayed in the first colored display area 1011, and the second color information is displayed in the second colored display area 1012.

The second color parameter may include any one or more color parameters, that is, color information corresponding to the any one or more color parameters may be displayed on the target object.

In some examples in which the display interface is a login display interface of a certain video application program, the electronic device displays the first color information and the second color information on the target object as shown in FIG. 4. FIG. 4 is a schematic diagram showing a display interface according to some arrangements, including a display interface 10, a target object 101 displayed in the display interface 10, a first colored display area 1011 and a second colored display area 1012 in the preset display area or a preset operation area of the target object 101. As show, the aggregate area of the first and second colored display area 1011 and 1012 is the preset display area or a preset operation area of the target object 101. In some arrangements, the ratio of the positions and sizes occupied by the first colored display area 1011 and the second colored display area 1012 in the preset display area or a preset operation area of the target object 101 is only illustrated as an example. The ratio of the positions and sizes occupied by the first colored display area 1011 and the second colored display area 1012 can be determined and provided according to the angle change data in the preset direction.

In some examples, the state change data in S203 may be detected by a gravity sensor, accelerometer, and/or gyroscope installed on the electronic device. Correspondingly, the angle change data in the preset direction of the electronic device in S2051 includes angle change data in at least one of three directions including an x-axis direction, a y-axis direction and a z-axis direction measured based on three-axis coordinate system of the gravity sensor, accelerometer, and/or gyroscope.

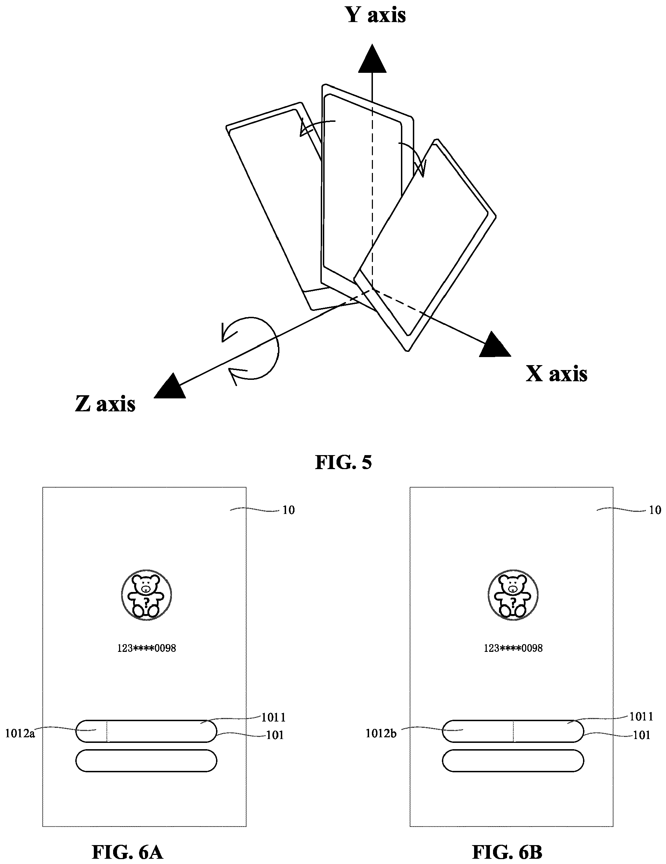

Specifically, taking a smart mobile phone as an example, as shown in FIG. 5, FIG. 5 is a schematic diagram showing a three-axis coordinate system according to some arrangements, wherein the x axis extends along or parallel to the width (left and right) direction of the mobile phone in an initial state (position and orientation), the y axis extends along or parallel to the length (up and down) of the mobile phone in an initial state (position and orientation), and the z axis is perpendicular to the display screen of the mobile phone. In some arrangements, the proportion of the first colored display area and the second colored display area is determined based on the angle change data detected in any one of the x-axis direction, the y-axis direction, and the z-axis direction. In some arrangements, the angle change data in the y-axis direction refers to the angle of the mobile phone offset from the y axis in the x-y plane, or may also be regarded as the angle of the mobile phone rotating around the z axis. Generally, the angle change data in the y direction indicates that the mobile phone is swayed from side to side. The angle change data in the x-axis direction refers to the angle at which the mobile phone rotates around the y axis and, generally, indicates that the mobile phone is turned around left and right. The angle change data in the z-axis direction refers to the angle at which the mobile phone rotates around the x axis and, generally, indicates that the mobile phone is flipped back and forth.

In some arrangements, the first colored display area of the first color information on the target object and the second colored display area of the second color information on the target object are determined in accordance with gravity sensing, with the first color information is displayed in the first colored display area, and the second color information is displayed in the second colored display area, thus improving the display interest of the target object and providing the user with better user experience.

In some arrangements, the above S205 may be further implemented as following.

Specifically, the color information corresponding to the target object is updated in such a way that the first colored display area of the first color information on the target object gradually shrinks or decreases in area, and the second colored display area of the second color information on the target object gradually expands or increases in area to fill the receded area of the first colored display area.

In some examples, an initial display area of the second color information on the target object is determined and changed (e.g., expanded, increased, decreased, shrinked, or so on) according to the angle change data in the preset direction, causing the second colored display area to be presented as gradually expanding from the initial display area.

Specifically, a correspondence relationship between the preset direction and the initial display area may be determined in advance, and then the initial display area corresponding to the detected preset direction may be changed or updated according to the correspondence relationship according to the angle change data in the preset direction.

Based on the above-mentioned arrangements, the following will continue to explain how the second colored display area gradually expands from the initial display area in some examples. Assuming that the angle change data in the preset direction is the rotation angle of the mobile phone around the z axis, FIGS. 6A and 6B are schematic diagrams showing a display interface according to some arrangements. As shown in FIG. 6A, the display interface 10 includes the target object 101, and the initial display area 1012a is included in the preset display area or a preset operation area of the target object 101. As shown in FIG. 6B, the display interface 10 includes the target object 101 displayed, and the second colored display area 1012b is included in the preset display area or a preset operation area of the target object 101. FIGS. 6A and 6B show that the initial display area 1012a is located in the left region of the preset display area or a preset operation area of the target object 101, but the initial display area 1012a may also be provided in the right region, top region, bottom region or other region of the preset display area or a preset operation area of the target object 101.

As mentioned herein, the first color parameter in some arrangements includes any single color parameter, and the color information corresponding to the single color is initially displayed on the target object. The second color parameter may include any one or more color parameters, that is, the color information corresponding to any one or more color parameters may be displayed on the target object.

In some arrangements, the color information displayed in the second colored display area includes solid color information corresponding to the second color parameter, and gradient color information transitioning from the first color parameter to the second color parameter.

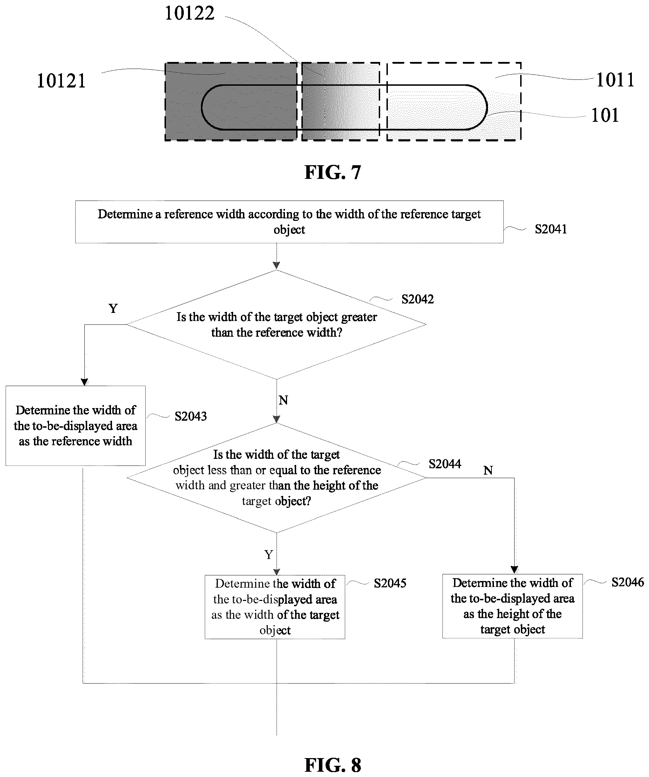

FIG. 7 is a schematic diagram showing a target object according to some arrangements, including the target object 101, the first color information displayed in the first colored display area 1011 of the target object 101, and the solid color information 10121 and gradation color information 10122 displayed in the second colored display area. Specifically in some examples, the color number corresponding to the first color information is #FE3666, and the color number corresponding to the solid color information 10121 may be #FF6048.

In order to achieve a better display effect, the height of the gradient color information displayed in the target object may be greater than or equal to the height of the target object, and the width of a to-be-displayed area corresponding to the gradient color information may be adapted to the size of the target object. Accordingly, the width of the to-be-displayed area corresponding to the gradient color information is determined.

In view of above, the method for displaying the target object according to the application may be further implemented as including following S204.

In S204, the width of the to-be-displayed area corresponding to the gradient color information is determined according to a width of a reference target object and the size of the target object, where the size of the target object includes height and width.

In some arrangements, the reference target object may be located in the login display interface, and the login display interface and the display interface belong to the same application. Specifically, the reference target object may be a login button control in the login display interface. Take a video application as an example, generally speaking, the size of the login button control in the login display interface is larger than that of any button controls in other display interfaces of the video application. Therefore, it is appropriate to use the login button control in the login display interface as the reference target object to further determine a to-be-displayed width of the gradient color information. Alternatively, the width of the aforementioned reference target object may be obtained directly from a database. For example, the width of the reference target object is pre-stored in the database as a general reference standard.

As mentioned herein, in order to improve display effect, the width of the to-be-displayed area corresponding to the gradient color information may be adapted to the size of the target object. If the sizes of different target objects in different display interfaces in the application program are different, the width of the to-be-displayed area corresponding to the gradient color information is also different. Accordingly, in some arrangements, as shown in FIG. 8, which is a flowchart of the method for displaying the target object according to some arrangements, the above S204 may be further implemented as following S2041 to S2046.

In S2041, a reference width is determined according to the width of the reference target object.

In S2042, it is determined whether the width of the target object is greater than the reference width. In response to determining that the width of the target object is greater than the reference width, S2043 is performed. On the other hand, in response to determining that the width of the target object is not greater than the referenced width, S2044 is performed.

In S2043, the width of the to-be-displayed area is determined as the reference width.

In S2044, it is determined whether the width of the target object is less than or equal to the reference width and greater than the height of the target object. In response to determining that the width of the target object is less than or equal to the reference width and greater than the height of the target object, S2045 is performed. On the other hand, in response to determining that the width of the target object is not less than or equal to the reference width or not greater than the height of the target object otherwise, S2046 is performed.

In S2045, the width of the to-be-displayed area is determined as the width of the target object.

In S2046, the width of the to-be-displayed area is determined as the height of the target object.

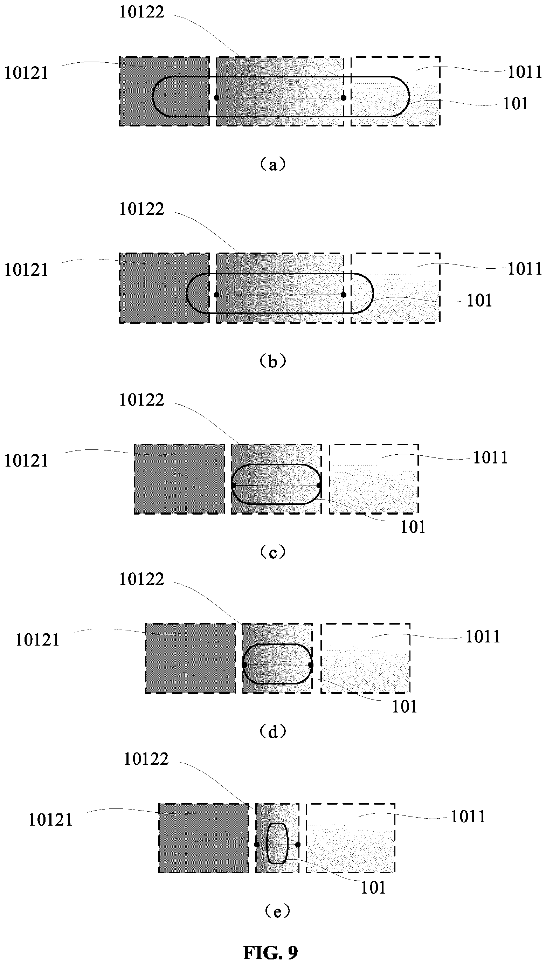

While taking an example in which the reference target object is the login button control in the login display interface, determining the to-be-displayed width of the gradient color information is described in detail herein. In response to that Android system runs on the smartphone, assuming that the width of the login button control in the login display interface of a video application is 264dp, half of the width of the login button control is used as the reference width, that is, the reference width is 132dp. FIG. 9 is a schematic diagram of a target object according to some arrangements, including the target object 101. In response to determining that the width of the target object 101 is greater than 132dp, as shown in FIG. 9 (a) and (b), the width of the to-be-displayed area corresponding to the gradient color information 10122 is 132dp. In response to determining that the width of the target object 101 is less than or equal to 132dp and greater than the height of the target object 101, as shown in FIG. 9 (c) and (d), the width of the to-be-displayed area corresponding to the gradient color information 10122 is the width of the target object 101. In response to determining that the width of the target object 101 is less than or equal to the height of the target object 101, as shown in FIG. 9 (e), the width of the to-be-displayed area corresponding to the gradient color information 10122 is this the height of the target object 101. Accordingly, in response to that the angle and direction at which the user holds the mobile phone changes, the target object 101 can be displayed with transition from the first color information to the gradient color information 10122 and further to the solid color information 10121, thus showing a "glossy" effect, which gives users better interest and richness.

In some arrangements of the present application, after determining the width of the to-be-displayed area corresponding to the gradient color information, the second colored display area on the target object may be not necessarily displayed with all the gradient color information corresponding to the width of the to-be-displayed area. In other words, the ratio of the solid color information to the gradient color information in the second colored display area is to be determined according to the angle change value in the detected angle change data.

Accordingly, in some arrangements, the angle change value in the angle change data is compared with a preset value, where the preset value may be an angle change value when a pre-determined center point of all the gradient color information corresponding to the width of the to-be-displayed area coincides with the center point of the target object (referring to the position of the gradient color information 10122 in FIG. 9). Based on the comparison result, displaying the second color information in the second colored display area in S2052 may be further implemented as follows.

In some examples, if the angle change value in the angle change data is less than the preset value, part of gradient color information corresponding to the angle change value is displayed in the second colored display area, and the width of the second colored display area is less than the width of the to-be-displayed area.

In some examples, if the angle change value in the angle change data is equal to the preset value, all the gradient color information corresponding to the angle change value is displayed in the second colored display area, and the width of the second colored display area is equal to the width of the to-be-displayed area.

in some examples, if the angle change value in the angle change data is greater than the preset value, all the gradient color information and part of the solid color information corresponding to the angle change value are displayed in the second colored display area, and the width of the second colored display area is greater than the width of the to-be-displayed area.

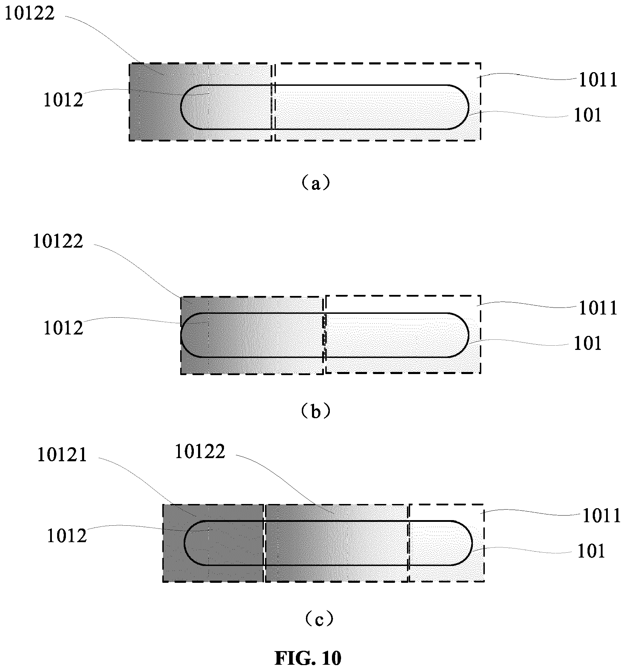

FIG. 10 is a schematic diagram showing a target object according to some arrangements, including the target object 101 and the second colored display area 1012 on the target object 101. In response to determining that the angle change value in the angle change data is less than the preset value, as shown in FIG. 10 (a), part of gradient color information 10122 corresponding to the angle change value is displayed in the second colored display area 1012. In response to determining that the angle change value in the angle change data is equal to the preset value, as shown in FIG. 10 (b), all the gradient color information 10122 corresponding to the angle change value is displayed in the second colored display area 1012. In response to determining that the angle change value in the angle change data is greater than the preset value, as shown in FIG. 10 (c), all the gradient color information 10122 and part of the solid color information 10121 corresponding to the angle change value are displayed in the second colored display area 1012. In this way, according to different angle change data, different color effects are displayed in the second colored display area 1012, thus improving the user experience on manipulation and interaction.

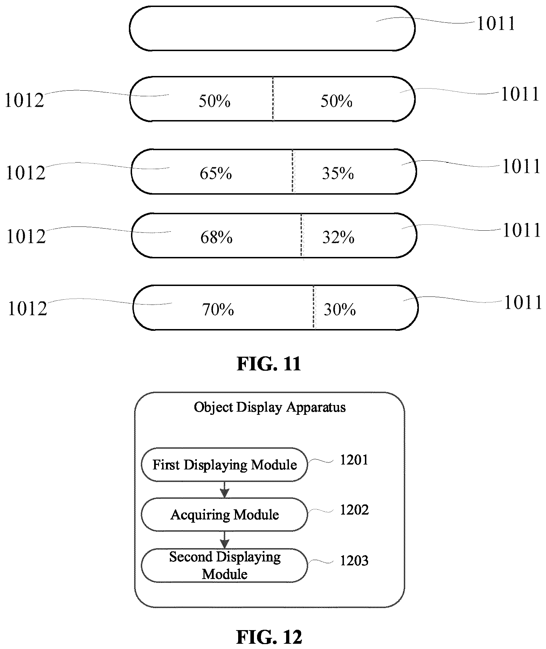

Specifically, FIG. 11 is a schematic diagram showing a target object according to some arrangements, including the proportions of the second colored display area 1012 and the first colored display area 1011 displayed in the target object 101 under different angle change values, specifically from top to bottom, the mobile phone rotates 0 degrees, 5 degrees, 20 degrees, 45 degrees and 90 degrees around the z axis. In some arrangements, the preset value is 5 degrees.

In some arrangements of the application, in order to cover as many different phones as possible on the market, different adaptive solutions may be proposed for different phones and different versions thereof. In some arrangements of the application, the electronic device can obtain its own resource information, and determine the above-mentioned preset value according to the resource information.

Optionally, the aforementioned resource information includes system information of the electronic device, such as Windows system, Android system and IOS system, and version information of the system in the electronic device, such as IOS 10 version, IOS 11 version, and the like. In this way, the present application can cover different phones currently on the market, so that more users can enjoy the convenience of the present application.

According to the arrangements of the disclosure, the target object is displayed in a display interface. The target object is displayed with first color information corresponding to a first color parameter and the target object includes a preset display area or a preset operation area in the display interface. State change data of the electronic device is acquired. At least two colored display areas of the target object are determined according to the state change data, with each of the colored display areas being displayed with different color information and a size of the colored display area being changed dynamically based on the state change data. The state change data is indicative of a change in direction and/or angle of the electronic device. According to the arrangements, the target object can be displayed with color changed based on the state change data, with different color information displayed in different colored display areas on the target object. Accordingly, in response to that the user holds the electronic device to swing left and right, the target object can be displayed with color having a dynamic change effect, thus improving interest and richness during user-machine interaction, so as to enhance the user experience.

FIG. 12 is a block diagram showing an apparatus for displaying a target object according to some arrangements. Referring to FIG. 12, the apparatus includes a first display module 1201 and a second display module 1202.

The first display module 1201 is configured to display a target object in a display interface, wherein the target object is displayed with first color information corresponding to a first color parameter and the target object includes a preset display area or a preset operation area in the display interface.

The acquiring module 1202 is configured to acquire state change data of an electronic device.

The second display module 1203 is configured to determine at least two colored display areas of the target object according to the state change data, with each of the colored display areas being displayed with different color information and a size of the colored display area being changed dynamically based on the state change data. The state change data is indicative of a change in direction and/or angle of the electronic device.

In some arrangements, the state change data includes angle change data in a preset direction, and the second display module 1203 includes a first determining module and a displaying submodule.

The first determining module is configured to determine, according to the angle change data in the preset direction, the first colored display area of the first color information on the target object and the second colored display area of second color information corresponding to a second color parameter on the target object.

The displaying submodule is configured to display the first colored display area with the first color information, and display the second colored display area with the second color information.

In some arrangements, the apparatus further includes an updating module.

The updating module is configured to update color information corresponding to the target object in such a way that the first colored display area of the first color information on the target object gradually shrinks, and the second colored display area of the second color information on the target object gradually expands.

In some arrangements, the apparatus further includes second determining module.

The second determining module is configured to determine, according to the angle change data in the preset direction, an initial display area of the second color information on the target object, causing a display area of the second color information to be presented with a procedure expanding gradually from the initial display area to the second colored display area.

In some arrangements, color information displayed in the second colored display area includes gradient color information transitioning from the first color parameter to the second color parameter, and the apparatus further includes a third determining module.

The third determining module, configured to determine, according to a width of a reference target object and a size of the target object, a width of a to-be-displayed area corresponding to the gradient color information. The size of the target object includes a height and a width.

In some arrangements, the reference target object is located in a login display interface, and the login display interface and the display interface belong to a same application.

In some arrangements, the color information displayed in the second colored display area further includes solid color information corresponding to the second color parameter, and the displaying submodule is configured to:
in response to determining that an angle change value in the angle change data is less than a preset value, display, in the second colored display area, a part of the gradient color information corresponding to the angle change value, where a width of the second colored display area is less than the width of the to-be-displayed area; or
in response to determining that the angle change value in the angle change data is equal to the preset value, display, in the second colored display area, all of the gradient color information corresponding to the angle change value, with the width of the second colored display area being equal to the width of the to-be-displayed area; or
in response to determining that the angle change value in the angle change data is greater than the preset value, display, in the second colored display area, the solid color information and all of the gradient color information corresponding to the angle change value, with the width of the second colored display area being greater than the width of the to-be-displayed area.

In some arrangements, the third determining module is configured to:
determine a reference width according to the width of the reference target object; and
determine, in response to that the width of the target object is greater than the reference width, the width of the to-be-displayed area as the reference width; or determine, in response to that the width of the target object is less than or equal to the reference width and greater than the height of the target object, the width of the to-be-displayed area as the width of the target object; or determine, in response to that the width of the target object is less than or equal to the height of the target object, the width of the to-be-displayed area as the height of the target object.

Regarding the apparatus in the foregoing arrangements, the specific manner in which each module performs the operation has been described in detail in the arrangements of the method, and a detailed description thereof will not be repeated here.

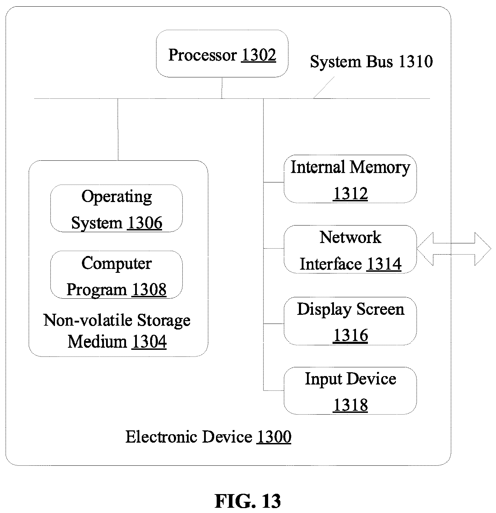

FIG. 13 is a block diagram showing an electronic device for displaying a target object according to some arrangements.

The electronic device 1300 may be a server or a terminal device, and its internal structure diagram may be as shown in FIG. 13. The electronic device 1300 includes a processor 1302, a memory (e.g., a non-volatile storage medium 1304), an internal memory 1312, a display screen 1316, input device 1318, and a network interface 1314 connected through a system bus 1310. In some arrangements, the processor 1302 of the electronic device 1300 is configured to provide calculation and control functions. The memory of the electronic device includes the non-volatile storage medium 1304 and an internal memory 1312. The non-volatile storage medium stores an operating system 1306 and a computer program. 1308 The internal memory 1312 provides an environment for the operation of the operating system1306 and computer programs 1308 in the non-volatile storage medium 1304. The network interface 1314 of the electronic device 1300 is configured to communicate with an external terminal through a network connection. The computer program 1308 is executed by the processor 1302 to perform methods for displaying the target object, which is displayed by the display screen 1316.

Those skilled in the art can understand that the structure shown in FIG. 13 is only a block diagram of a part of the structure related to the solution of the present disclosure, and does not constitute a limitation on the electronic device to which the solution of the present disclosure is applied. The specific electronic device may include more or fewer parts than shown in the drawing, or combining some parts, or having a different arrangement of parts.

In some arrangements, an electronic device is further provided, including: a processor; a memory for storing executable instructions of the processor; wherein the processor is configured to execute the instructions to implement the method for displaying the target object according to the arrangements of the disclosure.

In some arrangements, a computer-readable storage medium is further provided. When the instructions in the computer-readable storage medium are executed by a processor of an electronic device, thus causing the electronic device to implement the method for displaying the target object according to the arrangements of the disclosure.

In some arrangements, a computer program product is further provided. The computer program product includes a computer program. The computer program is stored in a readable storage medium. At least one processor of a computer device reads and executes the computer program from the readable storage medium, thus causing the computer device to implement the method for displaying the target object according to the arrangements of the disclosure.

It should be noted that the user information (including but not limited to user equipment information, user personal information, and the like) involved in this disclosure is information authorized by the user or fully authorized by all parties.

Those skilled in the art can understand that all or part of the processes in the above-mentioned method arrangements can be implemented by instructing relevant hardware through a computer program, which can be stored in a non-volatile computer readable storage medium. When the computer program is executed, it may include the processes of the above-mentioned method arrangements. In some arrangements, any reference to memory, storage, database or other medium used in the arrangements provided in this application may include non-volatile and/or volatile memory. The non-volatile memory may include read only memory (ROM), programmable ROM (PROM), electrically programmable ROM (EPROM), electrically erasable programmable ROM (EEPROM), or flash memory. The volatile memory may include random access memory (RAM) or external cache memory. As an illustration without limitation, RAM is available in many forms, such as static RAM (SRAM), dynamic RAM (DRAM), synchronous DRAM (SDRAM), double data rate SDRAM (DDRSDRAM), enhanced SDRAM (ESDRAM), synchlink DRAM (SLDRAM), Rambus direct RAM (RDRAM), direct Rambus dynamic RAM (DRDRAM), Rambus dynamic RAM (RDRAM), and the like.

Those skilled in the art will easily think of other arrangements of the present disclosure after reviewing the specification and practicing the invention disclosed herein. This application is intended to cover any variations, uses, or adaptive changes of the present disclosure. These variations, uses, or adaptive changes following the general principles of the present disclosure and include common knowledge or conventional technical means in the art that are not disclosed in the present disclosure. The description and the arrangements are to be regarded as exemplary only, and the scope and spirit of the present disclosure are limited by the following claims.

It should be understood that the present disclosure is not limited to the precise structure that has been described above and shown in the drawings, and various modifications and changes can be made without departing from its scope. The scope of the present disclosure is limited by the appended claims.

## Claims

1. A method for displaying a target object, performed by an electronic device and **characterized by** comprising:
displaying (S201) the target object in a display interface, wherein the target object is displayed with first color information corresponding to a first color parameter;
acquiring (S203) state change data of the electronic device, wherein the state change data is indicative of a change in at least one of direction or angle of the electronic device; and
determining (S205) at least two colored display areas of the target object according to the state change data, wherein each of the colored display areas is displayed with different color information and a size of the colored display area changes dynamically based on the state change data.

2. The method according to claim 1, wherein the at least two colored display areas comprises a first colored display area and a second colored display area, the state change data comprises angle change data in a preset direction, and the determining (S205) the at least two colored display areas of the target object according to the state change data comprises:
determining (S2051), according to the angle change data in the preset direction, the first colored display area of the first color information on the target object and the second colored display area of second color information corresponding to a second color parameter on the target object; and
displaying (S2052) the first colored display area with the first color information, and displaying the second colored display area with the second color information.

3. The method according to claim 2, further comprising:
updating color information corresponding to the target object by gradually shrinking the first colored display area of the first color information on the target object, and gradually expanding the second colored display area of the second color information on the target object.

4. The method according to claim 3, further comprising:
determining, according to the angle change data in the preset direction, an initial display area of the second color information on the target object, to enable the second colored display area to be presented as gradually expanding from the initial display area.

5. The method according to claim 2, wherein color information displayed in the second colored display area comprises gradient color information transitioning from the first color parameter to the second color parameter, and the method further comprises:
determining, according to a width of a reference target object and a size of the target object, a width of a to-be-displayed area corresponding to the gradient color information,
preferably, the reference target object is located in a login display interface, and the login display interface and the display interface belong to a same application.

6. The method according to claim 5, wherein the color information displayed in the second colored display area further comprises solid color information corresponding to the second color parameter, and the displaying the second colored display area with the second color information comprises:
in response to determining that an angle change value in the angle change data is less than a preset value, displaying, in the second colored display area, a part of the gradient color information corresponding to the angle change value, wherein a width of the second colored display area is less than the width of the to-be-displayed area; or
in response to determining that the angle change value in the angle change data is equal to the preset value, displaying, in the second colored display area, all of the gradient color information corresponding to the angle change value, wherein the width of the second colored display area is equal to the width of the to-be-displayed area; or
in response to determining that the angle change value in the angle change data is greater than the preset value, displaying, in the second colored display area, the solid color information and all of the gradient color information corresponding to the angle change value, wherein the width of the second colored display area is greater than the width of the to-be-displayed area.

7. The method according to claim 5, wherein the determining, according to the width of the reference target object and the size of the target object, the width of the to-be-displayed area corresponding to the gradient color information comprises:
determining a reference width according to the width of the reference target object; and
in response to that a width of the target object is greater than the reference width, determining the width of the to-be-displayed area as the reference width; or in response to that the width of the target object is less than or equal to the reference width and greater than a height of the target object, determining the width of the to-be-displayed area as the width of the target object; or in response to that the width of the target object is less than or equal to the height of the target object, determining the width of the to-be-displayed area as the height of the target object.

8. An apparatus for displaying a target object, **characterized by** comprising:
a first displaying module (1201), configured to display a target object in a display interface, wherein the target object is displayed with first color information corresponding to a first color parameter;
an acquiring module (1202), configured to acquire state change data of the electronic device, wherein the state change data is indicative of a change in at least one of direction or angle of the electronic device; and
a second displaying module (1203), configured to determine at least two colored display areas of the target object according to the state change data, wherein each of the colored display areas is displayed with different color information and a size of the colored display area changes dynamically based on the state change data.

9. The apparatus according to claim 8, wherein the at least two colored display areas comprises a first colored display area and a second colored display area, the state change data comprises angle change data in a preset direction, and the second displaying module (1203) comprises:
a first determining module, configured to determine, according to the angle change data in the preset direction, the first colored display area of the first color information on the target object and the second colored display area of second color information corresponding to a second color parameter on the target object; and
a displaying submodule, configured to display the first colored display area with the first color information, and displaying the second colored display area with the second color information.

10. The apparatus according to claim 9, further comprising:
an updating module, configured to update color information corresponding to the target object by gradually shrinking the first colored display area of the first color information on the target object gradually shrinks, and gradually expanding the second colored display area of the second color information on the target object.

11. The apparatus according to claim 10, further comprising:
a second determining module, configured to determine, according to the angle change data in the preset direction, an initial display area of the second color information on the target object, to enable the second colored display area to be presented as gradually expanding from the initial display area.

12. The apparatus according to claim 9, wherein color information displayed in the second colored display area comprises gradient color information transitioning from the first color parameter to the second color parameter, and the apparatus further comprises:
a third determining module, configured to determine, according to a width of a reference target object and a size of the target object, a width of a to-be-displayed area corresponding to the gradient color information,
preferably, the reference target object is located in a login display interface, and the login display interface and the display interface belong to a same application.

13. The apparatus according to claim 12, wherein the color information displayed in the second colored display area further comprises solid color information corresponding to the second color parameter, and the displaying submodule is further configured to:
in response to determining that an angle change value in the angle change data is less than a preset value, display, in the second colored display area, a part of the gradient color information corresponding to the angle change value, wherein a width of the second colored display area is less than the width of the to-be-displayed area; or
in response to determining that the angle change value in the angle change data is equal to the preset value, display, in the second colored display area, all of the gradient color information corresponding to the angle change value, wherein the width of the second colored display area is equal to the width of the to-be-displayed area; or
in response to determining that the angle change value in the angle change data is greater than the preset value, display, in the second colored display area, the solid color information and all of the gradient color information corresponding to the angle change value, wherein the width of the second colored display area is greater than the width of the to-be-displayed area.

14. The apparatus according to claim 12, wherein the third determining module is further configured to:
determine a reference width according to the width of the reference target object; and
in response to that a width of the target object is greater than the reference width, determine the width of the to-be-displayed area as the reference width; or, in response to that the width of the target object is less than or equal to the reference width and greater than a height of the target object, determine the width of the to-be-displayed area as the width of the target object; or, in response to that the width of the target object is less than or equal to the height of the target object, determine the width of the to-be-displayed area as the height of the target object.

15. A non-transitory computer-readable storage medium, wherein instructions in the computer-readable storage medium cause, when being executed by a processor of an electronic device, the electronic device to perform the method according to any one of claims 1 to 7.
